(19) Europäisches Patentamt
European Patent Office
Office européen des brevets

(11) **EP 3 491 227 B1**

(12) **FASCICULE DE BREVET EUROPEEN**

(45) Date de publication et mention
de la délivrance du brevet:
**02.09.2020  Bulletin 2020/36**

(51) Int Cl.:
***F02K 1/82*** *(2006.01)*      ***B64C 1/40*** *(2006.01)*
***F02C 7/045*** *(2006.01)*      ***G10K 11/172*** *(2006.01)*

(21) Numéro de dépôt: **17754424.4**

(22) Date de dépôt: **28.07.2017**

(86) Numéro de dépôt international:
**PCT/FR2017/052129**

(87) Numéro de publication internationale:
**WO 2018/020184 (01.02.2018 Gazette 2018/05)**

(54) **PANNEAU ACOUSTIQUE POUR UNE TURBOMACHINE ET SON PROCÉDÉ DE FABRICATION**

AKUSTIKVERKLEIDUNG FÜR EINE TURBOMASCHINE UND VERFAHREN ZUR HERSTELLUNG

ACOUSTIC PANEL FOR A TURBOMACHINE AND METHOD FOR THE PRODUCTION THEREOF

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **29.07.2016  FR 1657417**

(43) Date de publication de la demande:
**05.06.2019  Bulletin 2019/23**

(73) Titulaire: **Safran**
**75015 Paris (FR)**

(72) Inventeur: **PICCIRELLI, Nicola**
**77550 Moissy-Crayamel (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
**EP-A1- 1 533 787      FR-A1- 3 001 324**
**GB-A- 2 452 476      US-B1- 8 869 933**

## Description

DOMAINE TECHNIQUE

La présente invention concerne un panneau acoustique pour une turbomachine ainsi qu'un procédé de fabrication d'un tel panneau.

ETAT DE L'ART

L'état de l'art comprend notamment les documents US-B1-8,869,933, GB-A-2 452 476, EP-A1-1 533 787 et FR-A1-3 001 324.

Une turbomachine, telle qu'un turboréacteur, comprend classiquement une entrée d'air comportant une soufflante dont le flux d'air en sortie se divise en un flux d'air qui pénètre dans le moteur et forme un flux chaud ou flux primaire, et en un flux d'air qui s'écoule autour du moteur et qui forme un flux froid ou flux secondaire.

Le moteur comprend typiquement d'amont en aval, dans le sens d'écoulement des gaz, au moins un compresseur, une chambre de combustion, au moins une turbine, et une tuyère d'éjection dans laquelle les gaz de combustion sortant de la turbine et formant le flux primaire sont mélangés au flux secondaire.

La soufflante de la turbomachine est entourée par un carter de soufflante qui est intégré à la nacelle de la turbomachine. Il est connu de tapisser la surface interne de ce carter avec des panneaux acoustiques pour limiter la propagation du bruit généré par la soufflante.

Typiquement, un panneau acoustique comprend deux peaux sensiblement parallèles entre lesquelles sont situées et s'étendent des cavités formant des résonateurs de Helmholtz et par exemple organisées en nid d'abeille. Une des peaux est percée d'orifices débouchant dans les cavités et formant des cols des résonateurs.

Des paramètres des cavités, tels que leurs formes et leurs dimensions, sont déterminés pour que le panneau soit apte à absorber des bruits dans une plage de fréquences donnée. Cette plage de fréquences a une étendue relativement limitée ce qui fait qu'un panneau configuré pour absorber des bruits dans une plage de fréquences donnée n'est pas efficace pour absorber des bruits en dehors de cette plage.

En plus de la fonction d'isolation acoustique, la structure sandwich de ces panneaux, assure une tenue mécanique, et supporte des éléments d'assemblage additionnels.

Par ailleurs, la fabrication de ces panneaux comporte plusieurs étapes de fabrication et est donc relativement complexe : drapage de la peau inférieure, puis pré-consolidation de cette peau, positionnement de la structure en nid d'abeilles (en prenant garde de ne pas déformer les alvéoles) préalablement mise en forme et enduite d'adhésif, drapage de la peau supérieure, réticulation de la matrice polymère de l'ensemble, et perçage de l'une des peaux.

Cette approche présente les limitations ou inconvénients techniques suivants : le procédé de fabrication est peu flexible pour assurer une bonne isolation acoustique (perçage de la peau au niveau de chaque alvéole), et il est impossible de réparer localement une peau endommagée sans altérer l'isolation acoustique du panneau (isolation acoustique non dissociable de la structure). Suivant la forme du panneau, les performances d'isolation acoustique sont altérées car dépendantes de la capacité à réaliser une structure alvéolaire percées en tous points de la pièce.

EXPOSE DE L'INVENTION

La présente invention propose une solution simple, efficace et économique au problème de la technique antérieure.

L'invention propose un panneau acoustique pour une turbomachine, en particulier d'aéronef, comprenant deux peaux sensiblement parallèles et entre lesquelles sont situées et s'étendent des cavités formant des résonateurs de Helmholtz, une desdites peaux étant percée d'orifices débouchant dans lesdites cavités et formant des cols desdits résonateurs, des masses vibrantes étant prévues dans au moins certaines desdites cavités et reliées à des parois des cavités, caractérisé en ce que lesdites masses vibrantes sont reliées auxdites parois des cavités par des moyens élastiques logés dans lesdites cavités.

Les « masses » vibrantes sont avantageusement configurées pour étendre la plage de fréquences d'absorption des bruits du panneau. En effet, sous l'effet de la pression acoustique p, une force F, égale au produit p.A, (A étant la surface d'une « masse » vibrante) s'applique sur cette « masse » vibrante. Les « masses » se déplacent dans les cellules d'une valeur u égale au produit K.F (K étant une constante d'élasticité de la jonction élastique liant la masse au support). Ce déplacement a pour effet de modifier le volume de la cavité du résonateur de Helmholtz. La fréquence d'accord d'un résonateur de Helmholtz est dépendante du volume de la cavité elle-même (tout autre chose étant constante par ailleurs), comme le montre la relation ci-dessous.

Soit $f_0$ la fréquence d'accord d'une cellule de Helmholtz

$$f_0 = \frac{C}{2\pi}\sqrt{\frac{s}{Vl'}}$$

avec C = la célérité du son, S la section du col du résonateur, V le volume du résonateur, et l' la longueur corrigée ou géométrique du col.

Ainsi, toute variation de volume de la cavité génère une modification de la fréquence d'accord du résonateur. Les masses contenues dans les résonateurs sont alors en mesure de filtrer plusieurs fréquences acoustiques de manière dynamique.

Le panneau selon l'invention peut comprendre une ou plusieurs des caractéristiques suivantes, prises isolément les unes des autres ou en combinaison les unes avec les autres :

- chaque masse est reliée par une jonction élastique à une paroi d'une cavité,
- chaque masse est reliée par une jonction élastique à une des peaux,
- chaque masse est reliée par une jonction élastique à la peau opposée à celle percée,
- les masses sont montées vibrantes dans des directions sensiblement perpendiculaires aux peaux,
- les masses sont séparées par des jeux des parois des cavités,
- les moyens élastiques ou la jonction élastique comprennent/comprend une structure en maille ou alvéolaire, qui permet d'atteindre l'élasticité recherchée en adaptant la densité des mailles et la performance du matériau utilisé,
- les moyens élastiques sont configurés pour conférer auxdites masses leur propriété vibrante.

La présente invention concerne également une turbomachine, telle qu'un turboréacteur ou un turbopropulseur d'aéronef, comportant au moins un panneau tel que décrit ci-dessus.

La présente invention concerne encore un procédé de fabrication d'un panneau tel que décrit ci-dessus, comprenant une étape de réalisation desdites masses et desdits moyens élastiques par fabrication additive.

Le procédé de fabrication additive consiste à produire une pièce par dépôt ou consolidation successif des couches de matière. Les éléments acoustiques sont donc réalisés en une seule opération, et sont donc monolithiques.

Avantageusement, lesdites peaux et lesdites parois sont réalisées par fabrication additive.

De préférence, lesdites peaux et lesdites parois sont réalisées dans un premier matériau et lesdites masses et lesdits moyens élastiques sont réalisés dans un second matériau, différent du premier matériau.

## DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :

- la figure 1 est une vue très schématique en coupe d'un panneau acoustique selon l'art antérieur,
- la figure 2 est une vue très schématique en coupe d'un panneau acoustique selon l'invention, et
- la figure 3 est une vue très schématique d'une machine de réalisation d'un panneau selon l'invention, par fabrication additive.

## DESCRIPTION DETAILLEE

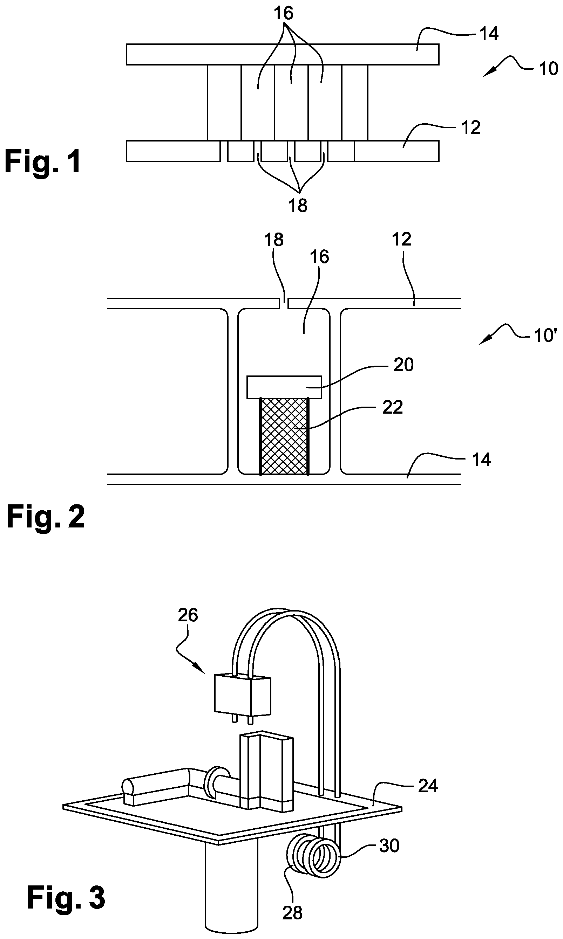

Un panneau acoustique 10, tel qu'illustré à la figure 1, comprend deux peaux 12, 14, sensiblement parallèles entre lesquelles sont situées une multitude de cavités 16.

Les cavités 16 sont régulièrement réparties et sensiblement identiques. Elles s'étendent les unes à côté des autres dans un même plan sensiblement parallèle aux peaux 12,14.

Chaque cavité 16 s'étend longitudinalement entre les peaux. Une des peaux, ici la peau 12, est percée et comprend une multitude d'orifices 18 qui débouchent dans les cavités 16, qui forment des résonateurs de Helmholtz. Les cavités 16 forment les cavités résonantes des résonateurs et les orifices 18 forment des cols de ces résonateurs.

La fréquence d'accord d'un résonateur de Helmholtz peut être approximée par la formule suivante :

$$\text{Fréq. d'accord} = \frac{C}{2\pi}\sqrt{\frac{S}{V\,l'}}$$

avec

C : célérité du son (m/s)
S : section du col (m²)
V : volume du résonateur (m³)
l' : longueur de col corrigée (m) ou l' = l + δ

avec

l : longueur géométrique de col(m)
δ : correction de col

$$\begin{cases} \delta = 1.7r\left(1 - 0.7\sqrt{\sigma}\right) \\ \text{pour des résonateurs juxtaposés} \end{cases}$$

r : rayon d'un orifice (m)
σ : taux de perforation

Dans cette formule, la section du col S revient à la section précitée d'un orifice 18, le volume du résonateur V revient au volume d'une cavité 16, et la longueur de col l ou l' revient sensiblement à l'épaisseur c de la peau 12 percée.

La figure 2 représente un mode de réalisation de l'invention. Dans au moins certaines des cavités 16 du panneau 10' selon l'invention sont prévues des masses 20 vibrantes reliées à des parois des cavités par des moyens élastiques 22.

De préférence, les moyens élastiques sont des jonctions élastiques et de préférence des structures en maille ou alvéolaires 22. Chaque masse 20 est reliée par une telle structure à une paroi d'une cavité.

Les masses 20 sont aptes à se déplacer par vibration dans des directions sensiblement perpendiculaires aux peaux 12, 14. Les masses sont séparées par des jeux des parois latérales des cavités, ainsi que des peaux, pour autoriser ces déplacements.

Chaque masse a un poids $M$ et est reliée à une structure en maille ou alvéolaire de souplesse $k$ et d'amortissement c. La masse peut osciller à l'intérieur de la cavité et possède un jeu $j$ avec les parois qui laisse passer de l'air.

Un choix judicieux des paramètres $M, k, c$ et $j$, dote la cavité de caractéristiques amortissantes visant à filtrer certaines plages de fréquence spécifique dans le spectre sonore émis par la turbomachine.

Le procédé de fabrication de la technique antérieure ne permet que la réalisation de cavités de formes relativement simples, dépendantes fortement de la géométrie des alvéoles du nid d'abeille.

Or, lorsque la géométrie des cavités est fixe, seules quelques fréquences sont filtrées. L'isolation acoustique de la solution actuelle n'est pas non plus optimale puisque les cavités constituées avec des alvéoles du nid d'abeilles ne filtrent que certaines fréquences ciblées (volume de la cavité fixe), et ne possède pas de fonction amortissante (filtration des basses fréquences).

L'invention permet de remédier à ce problème et propose également un procédé de fabrication du panneau 10', comprenant une étape de réalisation des masses 20 et des jonctions élastiques 22 par fabrication additive, comme illustré par la figure 3. De préférence, les peaux 12, 14 et les parois latérales des cavités 16 sont réalisées par fabrication additive. Dans ce cas, les peaux 12, 14 et les parois latérales sont réalisées dans un premier matériau et les masses 20 et les moyens élastiques 22 sont réalisés dans un second matériau, différent du premier matériau.

Il existe deux types de fabrication additive d'une pièce : soit la pièce est réalisée par fusion sélective de lits de poudre, soit la pièce est réalisée par dépôts successifs de matière fondue. Cependant, cette dernière technologie est la plus adaptée à la réalisation de ces cellules avec des « masses » vibrantes internes

Le procédé de fabrication additive par dépôt de fil fondu est illustré à la figure 3. La machine de la figure 3 comprend un plateau support 24 sur lequel le panneau acoustique 10' est réalisé. La machine comprend en outre une tête d'extrusion 26 alimentée par une bobine 28 du premier matériau et une bobine 30 du second matériau.

La tête d'extrusion 26 est apte à chauffer et faire fondre le matériau de chaque bobine 28, 30 afin de déposer la matière fondue correspondante sur le plateau support 24. La tête est mobile dans un plan parallèle au plateau et est ainsi apte à déposer la matière fondue sur toute la surface du plateau support, et également à superposer plusieurs couches de matériau, pour fabriquer une pièce en trois dimensions.

On comprend ainsi que la peau inférieure, par exemple 14, sera réalisée en premier au moyen de la bobine 28. Cette bobine est également utilisée pour fabriquer les parois latérales des cavités. Les structures en maille ou alvéolaires 22 sont ensuite réalisées en même temps que les parois des cavités 16, soit avec un même matériau soit en utilisant un second matériau, via la bobine 30, dont les performances mécaniques sont plus adaptées aux performances élastiques recherchées. A mesure que les parois sont réalisées, les structures sont réalisées, puis les masses 20 sont réalisées comme illustré dans la figure 2. Le reste des parois latérales des cavités est formé et la peau 12, ici supérieure, est réalisée avec ses orifices 18.

Les premier et second matériaux peuvent être des thermoplastiques.

## Revendications

1. Panneau acoustique (10') pour une turbomachine, en particulier d'aéronef, comprenant des masses vibrantes et des parois formant des cavités, les parois comprenant deux peaux (12, 14) sensiblement parallèles et entre lesquelles sont situées et s'étendent les cavités (16) formant des résonateurs de Helmholtz, une desdites peaux étant percée d'orifices (18) débouchant dans lesdites cavités et formant des cols desdits résonateurs, les masses vibrantes étant prévues dans au moins certaines desdites cavités et reliées à les parois des cavités, **caractérisé en ce que** lesdites masses (20) vibrantes sont reliées auxdites parois des cavités par des moyens élastiques (22) logés dans lesdites cavités.

2. Panneau (10') selon la revendication précédente, dans lequel chaque masse (20) est reliée par une jonction élastique (22) à une paroi (14) d'une cavité (16).

3. Panneau (10') selon la revendication précédente, dans lequel chaque masse (20) est reliée par une jonction élastique (22) à une des peaux (14).

4. Panneau (10') selon la revendication précédente, dans lequel chaque masse (20) est reliée par une jonction élastique (22) à la peau (14) opposée à celle (12) percée.

5. Panneau (10') selon l'une des revendications précédentes, dans lequel les masses (20) sont montées vibrantes dans des directions sensiblement perpendiculaires aux peaux (12, 14).

6. Panneau (10') selon l'une des revendications précédentes, dans lequel les masses (20) sont séparées par des jeux des parois des cavités (16).

**7.** Panneau (10') selon l'une des revendications précédentes, dans lequel lesdits moyens élastiques comprennent une structure en maille ou alvéolaire.

**8.** Panneau (10') selon l'une des revendications précédentes, dans lequel lesdits moyens élastiques sont configurés pour conférer auxdites masses leur propriété vibrante.

**9.** Turbomachine, telle qu'un turboréacteur ou un turbopropulseur d'aéronef, comportant au moins un panneau (10') selon l'une des revendications précédentes.

**10.** Procédé de fabrication d'un panneau (10') selon l'une des revendications 1 à 8, comprenant une étape de réalisation desdites masses (20) et desdits moyens élastiques (22) par fabrication additive.

**11.** Procédé selon la revendication précédente, dans lequel lesdites peaux (12, 14) et les parois latérales sont réalisées par fabrication additive.

**12.** Procédé selon la revendication précédente, dans lequel lesdites peaux (12, 14) et lesdites parois latérales sont réalisées dans un premier matériau et lesdites masses (20) et lesdits moyens élastiques (22) sont réalisés dans un second matériau, différent du premier matériau.

**Patentansprüche**

**1.** Schallschluckplatte (10') für eine Turbomaschine, insbesondere eines Flugzeugs, Schwingmassen und Wände umfassend, die Hohlräume bilden, wobei die Wände zwei Häute (12, 14) umfassen, die im Wesentlichen parallel sind und zwischen denen sich die Hohlräume (16) befinden und erstrecken, die Helmholtz-Resonatoren bilden, wobei eine der Häute mit Öffnungen (18) durchbohrt ist, die in die Hohlräume münden und Hälse der Resonatoren bilden, wobei die Schwingmassen in mindestens einigen der Hohlräume vorgesehen sind, und mit den Wänden der Hohlräume verbunden sind, **dadurch gekennzeichnet, dass** die Schwingmassen (20) mit den Wänden der Hohlräume durch elastische Mittel (22) verbunden sind, die in den Hohlräumen aufgenommen sind.

**2.** Platte (10') nach dem vorstehenden Anspruch, wobei jede Masse (20) durch einen elastischen Anschluss (22) mit einer Wand (14) eines Hohlraumes (16) verbunden ist.

**3.** Platte (10') nach dem vorstehenden Anspruch, wobei jede Masse (20) durch einen elastischen Anschluss (22) mit einer der Häute (14) verbunden ist.

**4.** Platte (10') nach dem vorstehenden Anspruch, wobei jede Masse (20) durch einen elastischen Anschluss (22) mit der Haut (14) gegenüber jener (12), die durchbohrt ist, verbunden ist.

**5.** Platte (10') nach einem der vorstehenden Ansprüche, wobei die Massen (20) in im Wesentlichen senkrechten Richtungen zu den Häuten (12, 14) schwingend montiert sind.

**6.** Platte (10') nach einem der vorstehenden Ansprüche, wobei die Massen (20) durch Spiele der Wände von den Hohlräumen (16) getrennt sind.

**7.** Platte (10') nach einem der vorstehenden Ansprüche, wobei die elastischen Mittel eine Maschen- oder Wabenstruktur umfassen.

**8.** Platte (10') nach einem der vorstehenden Ansprüche, wobei die elastischen Mittel konfiguriert sind, um den Massen ihre Schwingeigenschaft zu verleihen.

**9.** Turbomaschine, in der Art eines Turboreaktors oder Turboprop-Triebwerks eines Flugzeugs, mindestens eine Platte (10') nach einem der vorstehenden Ansprüche beinhaltend.

**10.** Verfahren zur Herstellung einer Platte (10') nach einem der Ansprüche 1 bis 8, einen Schritt zur Fertigung der Massen (20) und der elastischen Mittel (22) durch additive Herstellung umfassend.

**11.** Verfahren nach dem vorstehenden Anspruch, wobei die Häute (12, 14) und die Seitenwände durch additive Herstellung gefertigt werden.

**12.** Verfahren nach dem vorstehenden Anspruch, wobei die Häute (12, 14) und die Seitenwände aus einem ersten Werkstoff gefertigt sind und die Massen (20) und die elastischen Mittel (22) aus einem zweiten Werkstoff gefertigt sind, der sich von dem ersten Werkstoff unterscheidet.

**Claims**

**1.** An acoustic panel (10') for a turbomachine, in particular for an aircraft, comprising vibrating masses and walls forming cavities, said walls comprising two skins (12, 14) that are substantially parallel and between which are located and extend the cavities (16) forming Helmholtz resonator, one of said skins being perforated by orifices (18) opening into said cavities and forming necks of said resonators, the vibrating masses being provided in at least some of said cavities and connected to the cavities walls, **characterized in that** said vibrating masses (20) are connected to said cavity walls by elastic means (22) housed in said cavities.

2. The panel (10') according to the previous claim, wherein each mass (20) is connected by an elastic junction (22) to a wall (14) of a cavity (16).

3. The panel (10') according to the previous claim, wherein each mass (20) is connected by an elastic junction (22) to one of the skins (14).

4. The panel (10') according to the previous claim, wherein each mass (20) is connected by an elastic junction (22) to the skin (14) opposite to the perforated one (12).

5. The panel (10') according to one of the preceding claims, wherein the masses (20) are mounted vibrating in directions substantially perpendicular to the skins (12, 14).

6. The panel (10') according to one of the preceding claims, wherein the masses (20) are separated by gaps in the walls of the cavities (16).

7. The panel (10') according to one of the preceding claims, wherein said elastic means includes a mesh or cellular structure.

8. The panel (10') according to one of the preceding claims, wherein said elastic means are configured to give said masses their vibrating property.

9. A turbomachine, such as an aircraft turboprop or turbojet, including at least one panel (10') according to one of the preceding claims.

10. A method of manufacturing a panel (10') according to one of the claims 1 to 8, including a step of producing said masses (20) and said elastic means (22) by additive manufacturing.

11. The method according to the previous claim, wherein said skins (12, 14) and the side walls are produced by additive manufacturing.

12. The method according to the preceding claim, wherein said skins (12, 14) and said side walls are produced in a first material and said masses (20) and said elastic means (22) are produced in a second material, different from the first material.

**Fig. 1**

16

14

10

12

18

**Fig. 2**

18    16    12

10'

20

22

14

**Fig. 3**

26

24

30

28

**EP 3 491 227 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8869933 B1
- GB 2452476 A
- EP 1533787 A1
- FR 3001324 A1